# EUROPEAN PATENT APPLICATION

(11) **EP 4 756 724 A1**
(43) Date of publication of application: **10.06.2026**
(21) Application number: 24222873.2
(22) Date of filing: 23.12.2024
(51) Int. Cl.: G06T 17/20, G06T 17/00

(54) **GENERATION OF CONSISTENTLY CONNECTED VORONOI MESHES ON GPU**

(30) Priority: 04.12.2024 US 202418968783
(71) Applicant: Ansys, Inc., Canonsburg, PA 15317 (US)
(72) Inventor: SCHOLZ, Dominik Nikolaus, Canonsburg, 15317 (US); MACLEAN, Keigan Joseph, Canonsburg, 15317 (US)
(74) Representative: Carpmaels & Ransford LLP

(57) **Abstract**

Systems and methods calculate Voronoi cells in a space subdivided into octants represented by an octree. Calculation of a Voronoi cell for a given seed point starts with the neighboring octants by determining the bisectors between the neighboring seed points and given seed point as well as the vertices where the bisectors meet. Additional octants are identified that (i) are adjacent to a neighboring octant and (ii) include any portion of the space that is no farther from a vertex than [(the distance between the vertex and the given seed point) + (additional distance ε)], such additional octants are added to the set of neighboring octants, and the sets of bisectors and vertices are updated using robust geometric predicates. This repeats until no additional octants are identified, and the bisectors and vertices are (optionally compressed, then) output as the Voronoi cell. Multiple cells can be determined in parallel, then combined into a Voronoi mesh.

## Description

### Field

The technology disclosed herein pertains to electric digital data processing, and in particular to generation of Voronoi meshes.

### Background

Graphical processing systems make and apply Voronoi meshes in many contexts. They are useful when describing, simulating, evaluating, or creating textures on surfaces of real 3D objects, such as "crazing" of glaze on pottery or old paint on a wall, and when simulating physical systems, where each Voronoi cell may characterize a region in space that has approximately consistent properties like temperature, pressure, and movement. However, techniques for calculating Voronoi meshes can be memory-intensive and unstable, reducing their suitability for use in graphics processing unit (GPU) environments and making them too inaccurate or too slow for many uses. Accordingly, there is a need for improvements in data processing technology, particularly in the creation and use of Voronoi meshes.

### Summary

Some embodiments of the disclosed technology may be used to address difficulties such as those described above. As the Voronoi cell for a given seed point is determined, the system considers octree-defined "neighboring octants" around the region that contains the given seed point, determines a set of edges (in 2D) or faces (in 3D), each midway between the given seed point and the seed points in a neighboring octant and therefore called edge segments or bisectors, the vertices where the bisectors meet, and evaluates whether a circle (2D) or a sphere (3D) (centered at any vertex and with a radius slightly longer than the distance between the vertex and the given seed point) encompasses any portion of a "candidate octant" next to any of the current neighboring octants. If so, those (at least partially) encompassed candidate octants are added to the set of neighboring octants, and the set of bisectors, and vertices as well as the seed points from the neighboring octants are updated. When an iteration does not add new neighboring octants, the system may compress data characterizing the bisectors and/or vertices before outputting them as the Voronoi cell about the given seed point. The disclosed technology may be used to efficiently create Voronoi meshes using GPU-based resources, and even to allow the meshes to be generated and stored on the same GPU as the solver (e.g., such as a physics solver or other simulation software) or other application that uses the meshes in a particular implementation.

It should be appreciated that all combinations of the foregoing concepts and additional concepts discussed in greater detail below (provided such concepts are not mutually inconsistent) are contemplated as being part of the inventive subject matter disclosed herein and to achieve the benefits as described herein.

### Brief Description of the Drawings

The drawings and detailed description that follow are intended to be merely illustrative and are not intended to limit the scope of the invention as contemplated by the inventors. Other features, aspects, and advantages will become apparent from the description, the drawings, and the claims.
Fig. 1 is a flowchart illustrating a process for creating and using a Voronoi mesh.
Fig. 2 is a block mesh of a computing system that may be used to implement the process illustrated in Fig. 1.
Fig. 3 illustrates a plane with seed points for which a Voronoi cell is developed according to the process illustrated in Fig. 1.
Figs. 4A-4E illustrated development of the Voronoi cell in the plane illustrated in Fig. 3.
Fig. 5 is a flowchart illustrating an exemplary process for determining a Voronoi cell.
Fig. 6 is a flowchart illustrating an exemplary process for determining a Voronoi mesh and, optionally, solving a computational system therewith.
Fig. 7 is a flowchart illustrating an alternative exemplary process for determining a Voronoi cell.

### Description

The inventors have conceived of novel technology that, for the purpose of illustration, is disclosed herein as applied in the context of graphical processing and simulations in n-space. While the disclosed applications of the inventors' technology satisfy a long-felt but unmet need in the art of graphical processing and simulations, it should be understood that the inventors' technology is not limited to being implemented in the precise manners set forth herein but could be implemented in other manners without undue experimentation by those of ordinary skill in the art in view of this disclosure. Accordingly, the examples set forth herein should be understood as being illustrative only and should not be treated as limiting.

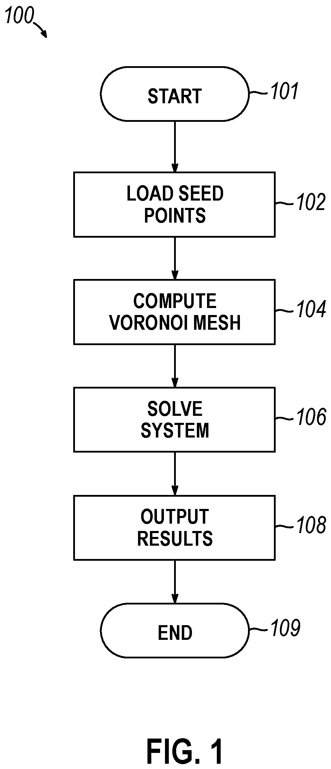

Generally, in one form of the present system illustrated in Fig. 1, overall process (100) begins at start point (101), and seed points are loaded (102) into a computational system. The computational system computes (104) the Voronoi mesh(es) and solves (106) the related mathematical system. The computational system outputs (108) the results, and the overall process (100) terminates at end point (109). In alternative forms, the computational system merely computes (104) the Voronoi mesh, leaving it to other components and/or software to solve the broader system and output results.

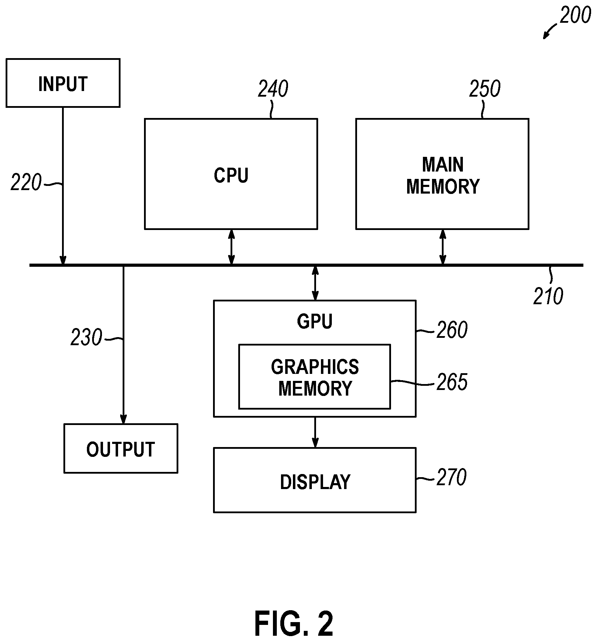

Fig. 2 illustrates a computing system (200) that implements overall process (100). A data bus (210) receives input data (220) and provides output data (230), also exchanging data with CPU (240), main memory (250), and graphics processing unit, or GPU, (260). GPU (260) includes graphics memory (265) and provides output to one or more displays (270). In various alternative implementations, CPU (240), GPU (260), main memory (250), graphics memory (265), and data bus (210) have different connectivity and/or configurations, and each may be a single component or multiple components working together, all within the scope of the present disclosure.

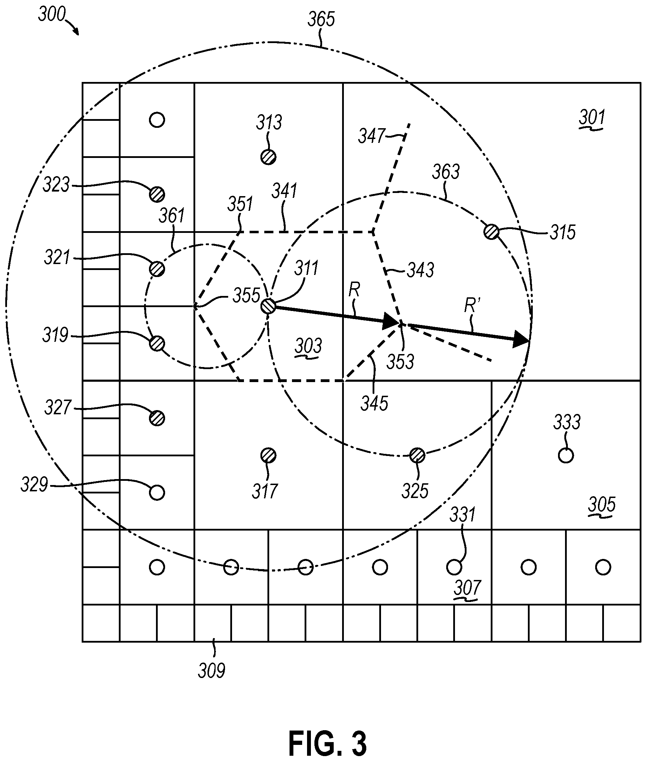

Turning to Fig. 3, plane (300) represents a two-dimensional example of *n-*dimensional space, subdivided into regions or octants of various sizes, including large octant (301), smaller octants (303, 305), and still smaller octants (307, 309). The octants of plane (300) are preferably represented in an octree, hierarchical tree structure, or other recursive data structure (any of which, and regardless of dimension, may be called an "octree" herein) stored in graphics memory (265). Plane (300) also includes a plurality of seed points (311, 313, 315, 317, 319, 321, 323, 325, 327, 329, 331, 333) that, in this example, maintain a 1-to-1 relationship with an octant and are located in the center or centroid of that octant. However, it should be understood that in other examples there may be more than one seed point per octant, and the seed point may not be at the center or centroid of its octant. As an example, when describing origin from an octree, a small countable number of seed points may come from a single octant, as traversal of octants to find neighbors is independent of seed points that will be used to create a Voronoi cell. Using the systems and methods described herein, the Voronoi mesh with reference to the seed points, that Voronoi mesh being illustrated in part in dashed line segments (341, 343, 345, 347) meeting at vertices (351, 353, 355), is determined with reference to certain radii (R, R') and certain round/spherical (i.e., constant-radius) search regions (361, 363, 365). It should be understood that, while two-dimensional examples are explained herein in detail, the disclosed system and method are advantageously applied to three-dimensional systems and can be applied to any n-dimensional system where *n* ≥ 2 as will be understood by those skilled in the art. Thus, a "circle" may be any set of points in the space that are a given distance from a particular center point, which might be a circle in two dimensions or a sphere in three dimensions. The dashed lines depict the bisectors between seed points, i.e. bisector edges as drawn in 2D, which generalize to bisector faces in 3D.

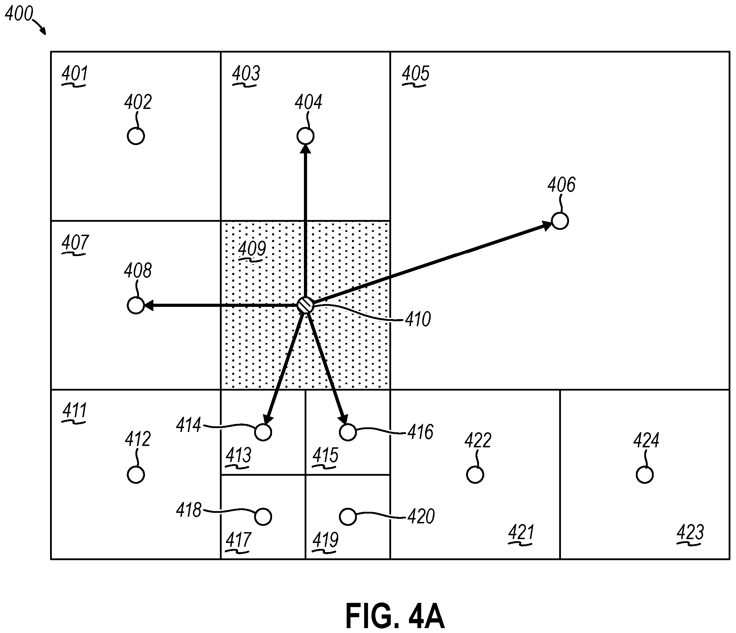

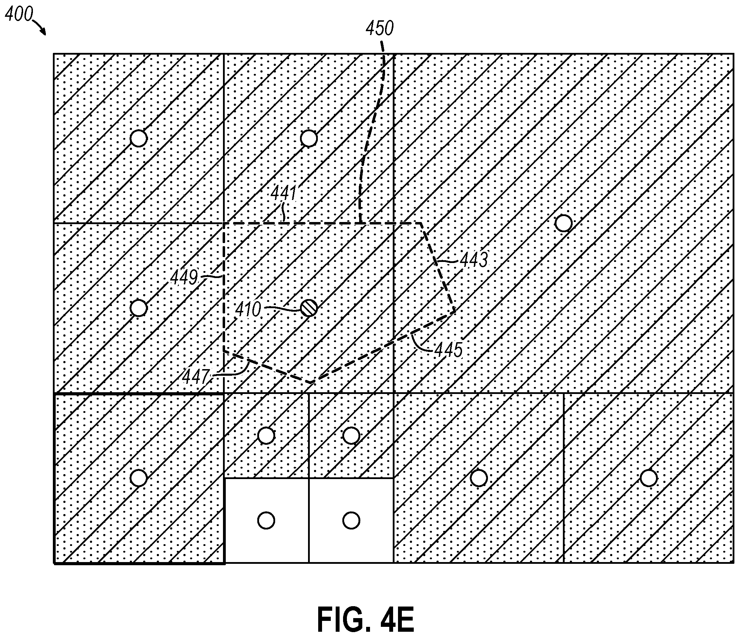

With reference to another two-dimensional example plane (400) in Fig. 4A, each of a plurality of octree-represented octants (401, 403, 405, 407, 409, 411, 413, 415, 417, 419, 421, 423) each contain a respective seed point (402, 404, 406, 408, 410, 412, 414, 416, 418, 420, 422, 424). In this example, each seed point (402, 404, 406, 408, 410, 412, 414, 416, 418, 420, 422, 424) is again in the center or centroid of the corresponding octant (401, 403, 405, 407, 409, 411, 413, 415, 417, 419, 421, 423), but has been noted it is not a requirement that the seed point be in the center of the corresponding octant.

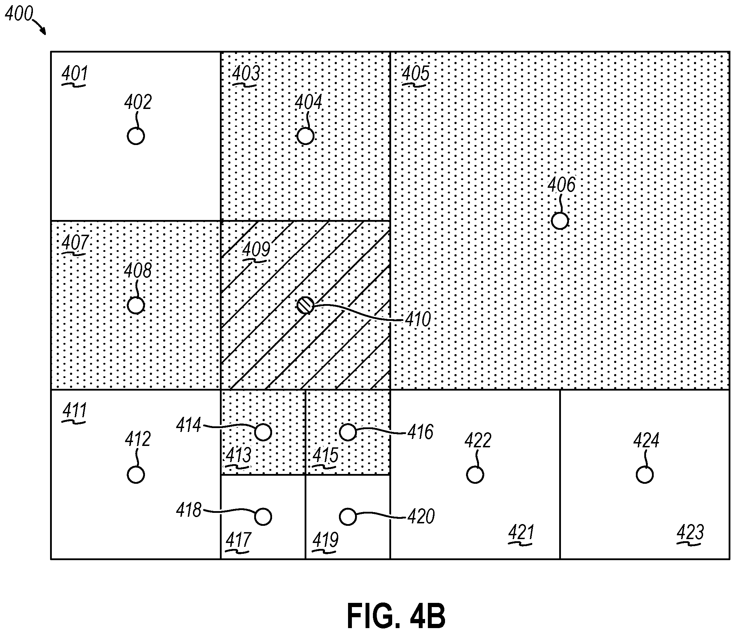

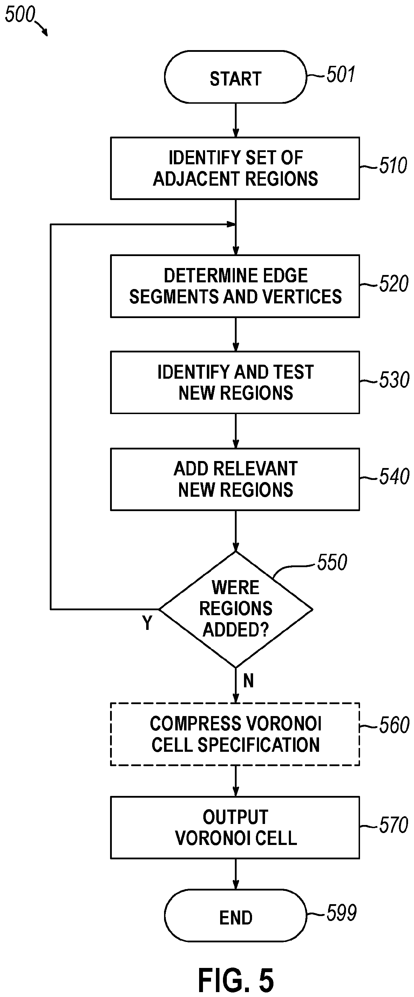

With additional reference to Fig. 5, the process (500) of determining the Voronoi cell for a first seed point (410) begins by using the octree to identify (510) the set of neighboring octants (403, 405, 407, 413, 415) adjacent to the octant (409) that contains that first seed point (410) and the seed points (404, 406, 408, 414, 416) in those neighboring octants. Additional octants (401, 411, 417, 419, 421, 423) that are not adjacent to the octant (409) that contains the first seed point (410) need not be accessed at this point in the process (500). The set of neighboring octants at this point in the process (500) includes those shown with stippling in Fig. 4B, except the octant (409) that contains the first seed point (410).

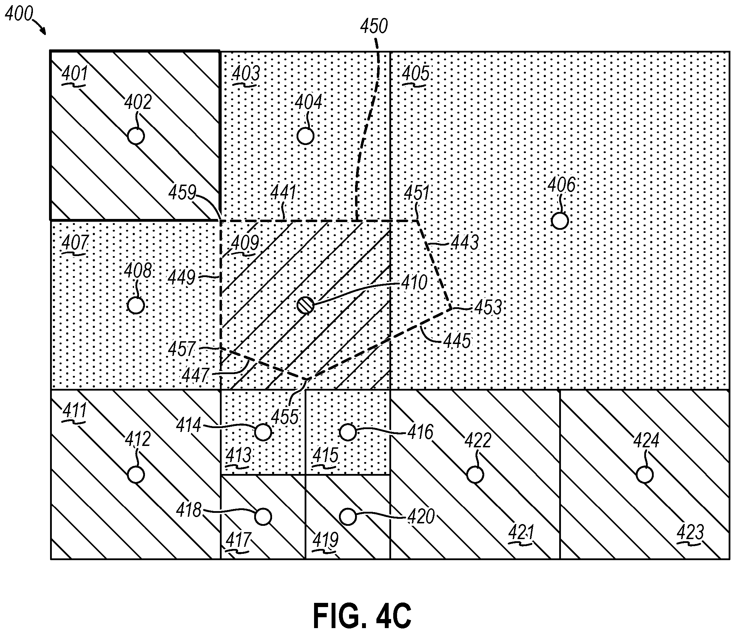

Turning to Fig. 4C, and with continuing reference to Fig. 5, process (500) then determines (520) a set of bisectors, each of which comprises the points equidistant from the first seed point (410) and each seed point (404, 406, 408, 414, 416) in the neighboring octants (403, 405, 407, 413, 415), and a corresponding set of vertices at which those bisectors meet. In some implementations, the equidistant vertices are determined first using robust predicates, then are formed into loops (e.g., or lines for two dimensional space) creating the equidistant bisector between two adjacent seed points. For example, bisector (441) is the perpendicular bisector of the segment connecting first seed point (410) with neighbor seed point (404), and bisector (443) is the perpendicular bisector of the segment connecting for seed point (410) with neighbor seed point (406). Bisector (441) and bisector (443) meet at vertex (451). Similarly, bisector (445) is the perpendicular bisector of the line segment connecting first seed point (410) with neighbor seed point (416) and meets bisector (443) at vertex (453). Bisector (447) is the perpendicular bisector between first seed point (410) and neighbor seed point (414) and meets bisector (445) at vertex (455), while bisector (449) is the perpendicular bisector of the segment between first seed point (410) and neighbor seed point (408), meeting bisector (447) at vertex (457), and meeting bisector (441) at vertex (459). As can be seen in Fig. 4C, a Voronoi cell (450) is formed by the bisectors (441, 443, 445, 447, 449).

It is noted that, in this disclosure, if space (400) is of dimension n, each bisector will have dimension *n-1.* For example, in 3-space, each bisector determined in this step will be a (two-dimensional) plane.

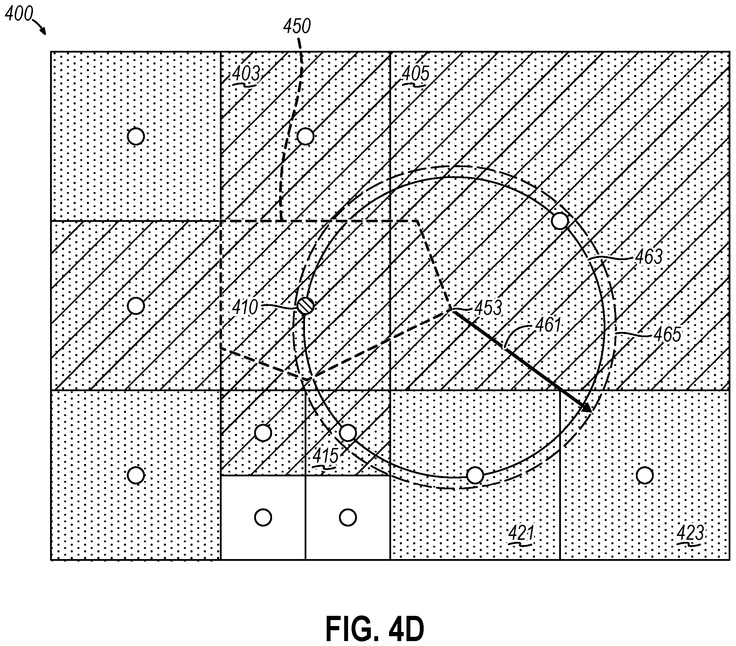

With continuing reference to Fig. 5, process (500) then uses the octree to identify and test (530) candidate octants (401, 411, 417, 419, 421, 423) (shown in Fig. 4C with un-stippled diagonal hatching) in plane (400) that are adjacent to the octants (403, 405, 407, 413, 415) already included in the set of neighboring octants. For each vertex (451, 453, 455, 457, 459), the system determines (see, for example, Fig. 4D) whether a circle that is centered at the vertex and has a radius R" (461) (where R" = {the distance between the vertex and the first seed point (410)} + {an additional distance ε}) includes any portion of one or more of the candidate octants (401, 411, 417, 419, 421, 423). In some alternative embodiments, instead of each vertex being checked, only the vertices that were added or changed during the last "determining" operation (520) are checked, as the unchanged vertices would have been checked during a previous iteration of the subprocess that comprises steps (520, 530, 540, 550).

As shown in Fig. 4D, circle (463) has a radius equal to the distance between vertex (453) and first seed point (410), but precise calculations might put key intersections exactly on the circle, so adding the additional distance ε to yield radius (461) yields a slightly more inclusive circle (465) and avoids having a rounding error result in missing one or more relevant octants.

So, as can be seen in Fig. 4D with continuing reference to Fig. 4C, circle (465) encompasses at least a portion of candidate octants (421, 423). Likewise, the circle around vertex (457) will include a portion of octant (411), and the circle around vertex (459) will include a portion of octant (401). These zero or more new octants (401, 411, 421, 423) are added (540) to the set of neighboring octants or, equivalently, the corresponding seed points (402, 412, 422, 424) are added to the set of neighboring seed points.

If this identify and test operation (530) results in the addition (540) of any new neighboring octants (a positive result at decision block (550)), process (500) continues by again determining (520) the bisectors and vertices around the first seed point (410) as discussed above in connection with block (520). If, instead, the identify and test operation (530) results in the addition (540) of no new neighboring octants (a negative result at decision block (550)), process (500) may continue by optionally compressing the digital representation of the Voronoi cell specification. Such compression may be performed as described in Padyana, Ajith, et al., High Throughput Compression of Floating Point Numbers on Graphical Processing Units, https://doi.org/10.1109/PDGC.2012.6449838; Floating Point Compression: Lossless and Lossy Solutions, Lawrence Livermore National Laboratory; or other technique as will occur to those skilled in the art in view of this disclosure. Whether compressed or not, the Voronoi cell specification is output (570), and process (500) terminates at end point (599).

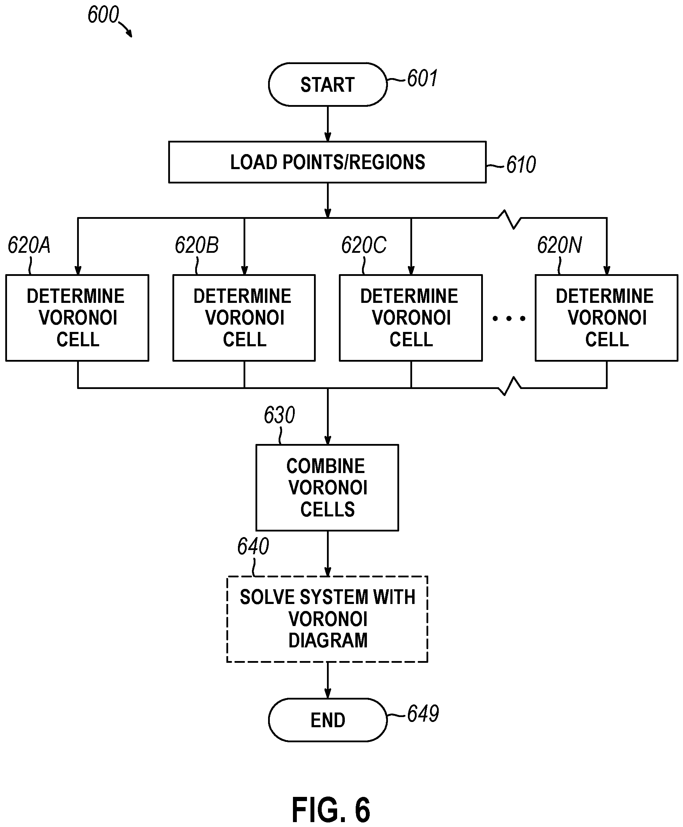

One useful application of Voronoi cell determination process (500) is illustrated in Fig. 6 as process (600). After the seed points and/or octants in a space are loaded (610), the boundaries of the corresponding Voronoi cells are determined (620A, 620B, 620C, ... 620N) in one or more sets of parallel operations. When all of the Voronoi cells corresponding to the loaded points/octants have been determined, they are combined (630) into a consistently connected Voronoi mesh. In various embodiments where determination (620A, 620B, 620C, ... 620N) of the Voronoi cell specifications includes compressing those specifications, the combination (630) operation may comprise combining the compressed forms of the Voronoi cell specifications into a consistently connected Voronoi mesh; decompressing the Voronoi cell specifications and outputting the consistently connected Voronoi mesh in decompressed form; or decompressing the Voronoi cell specifications, compressing the Voronoi mesh, and outputting the consistently connected Voronoi mesh in compressed form.

Process (600) optionally continues by solving (640) a numeric system using the Voronoi mesh. Process (600) terminates at end point (649).

With continuing reference to Fig. 6, and returning to Fig. 2, in some embodiments, the Voronoi cell determination (620A, 620B, 620C, ... 620N) and combination (630) all occur solely on a GPU (260) using only graphics memory (265). In some of these embodiments, the solving (640) of the system also occurs solely on a GPU (260) using only graphics memory (265).

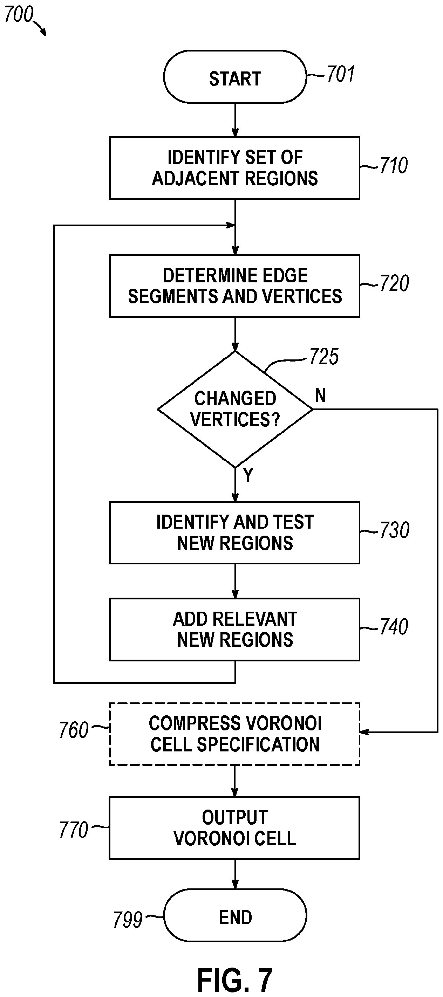

An alternative to process (500), process (700), is illustrated in Fig. 7 and begins at start point (701). The alternative process (700) may be used, for example, in implementations where each octant is guaranteed to have exactly one seed point. With reference back to Fig. 4A, and in comparison with the discussion of Fig. 5, as at step (510), process (700) first uses the octree to identify the set of neighboring octants (403, 405, 407, 413, 415) adjacent to the octant (409) containing first seed point (410) and the seed points (404, 406, 408, 414, 416) in those neighboring octants. With added reference to Fig. 4C, as at step (520), process (700) then determines (720) a set of bisectors, each of which is midway between the first seed point (410) and each seed point (404, 406, 408, 414, 416) in the neighboring octants (403, 405, 407, 413, 415), and a corresponding set of vertices at which those bisectors meet.

Then, if any new vertices were added or changed (or, equivalently, any bisectors were added or changed) during the determination operation (720) (that is, with a positive result at decision block (725)), as at step (530), process (700) identifies and tests (730) candidate octants (401, 411, 417, 419, 421, 423) in plane (400) that are adjacent to the octants (403, 405, 407, 413, 415) already included in the set of neighboring octants. For each previously determined vertex (451, 453, 455, 457, 459), the system determines (see, for example, Fig. 4D) whether a circle centered at the vertex and having a radius (461) equal to the sum of the distance between the vertex and the first seed point (410) and an additional distance ε includes any portion of one or more of the candidate octants (401, 411, 417, 419, 421, 423). In some alternative embodiments, instead of each vertex being checked, only the vertices that were added or changed during the last "determining" operation (720) are checked, as the unchanged vertices would have been checked during a previous iteration of the subprocess comprising steps (720, 725, 730, 740).

Process (700) then adds (740) to the set of neighboring octants the zero or more candidate octants that are adjacent to at least one of the octants in the set of neighboring octants and overlap to some extent with a circle centered at a vertex and with a radius (461) equal to the sum of the distance between the vertex and the first seed point (410) and an additional distance ε. Equivalently, the seed points in those zero or more candidate octants are added to the set of neighboring seed points. In either event, then, process (700) returns to "determining" step (720) and continues as above.

If decision block (725) yields a negative result because no vertices changed during the immediately preceding "determining" step (720), process (700) continues by optionally compressing (760) the accumulated Voronoi cell specification and, whether compressed or not, outputting (770) the Voronoi cell specification. Process (700) ends at end point (799).

In some embodiments of the various processes and systems described herein, the testing steps are implemented on GPU (260) using robust primitives. For example, the testing steps that determine whether a neighbor seed point lies at least in part within a particular radius of a vertex may be implemented using the "incircle" predicate described in Qi, Meng, et al., GPredicates: GPU Implementation of Robust and Adaptive Floating-Point Predicates for Computational Geometry, DOI:10.1 109/ACCESS.2019.2911641 (2019).

In some embodiments of the various processes and systems shown herein, testing of a plurality of predicates is first done using "rough," inexact algorithms and/or arithmetic with a known profile of possible error. In some implementations, the set of predicates to be tested is then "compacted" by removing results that are certain to be correct because the margin between the result and the test threshold is beyond the profile of possible error, or alternatively by implicitly skipping the results that are associated with sufficient accuracy for the remaining robust predicate steps. In some implementations, the remaining predicates are tested using exact evaluation and/or arithmetic to complete the testing process. In some implementations, a fast-robust approach may be used, where there is not an exact computation, but robust predicates described with expanding series. In some embodiments of the processes and systems described herein, a rough-compact-exact approach, fast-robust approach, or other method is applied to the testing of candidate octants at steps (530, 730), while in others portions of each "determining" step (620A, 620B, 620C, ... 620N) in process (600) are broken out into phases and implemented in parallel, such as by pipelines of SIMD (e.g., single instruction, multiple data) operations or SIMT (e.g., single instruction, multiple threads) operations.

The CPU (240) in some embodiments is a microcontroller or general purpose microprocessor that reads its program from the main memory (250). The processor (240) and/or GPU (260) may each be comprised of one or more components configured as a single unit. Alternatively, when of a multi-component form, the processor may have one or more components located remotely relative to the others. One or more components of the processor may be of the electronic variety including digital circuitry, analog circuitry, or both. In some embodiments, the processor is of a conventional, integrated circuit microprocessor arrangement, while in others nontraditional or innovative data processing technology is used. In alternative embodiments, one or more reduced instruction set computer (RISC) processors, application-specific integrated circuits (ASICs), general-purpose microprocessors, programmable logic arrays, or other devices may be used alone or in combinations as will occur to those skilled in the art.

Likewise, main memory (250) and/or graphics memory (265) in various embodiments includes one or more types such as solid-state electronic memory, magnetic memory, or optical memory, just to name a few. By way of non-limiting example, main memory (250) and/or graphics memory (265) can include solid-state electronic Random Access Memory (RAM), Sequentially Accessible Memory (SAM) (such as the First-In, First-Out (FIFO) variety or the Last-In First-Out (LIFO) variety), Programmable Read-Only Memory (PROM), Electrically Programmable Read-Only Memory (EPROM), or Electrically Erasable Programmable Read-Only Memory (EEPROM); an optical disc memory (such as a recordable, rewritable, or read-only DVD or CD-ROM); a magnetically encoded hard drive, floppy disk, tape, or cartridge medium; a solid-state or hybrid drive; or a plurality and/or combination of these memory types. Also, the memory in various embodiments is volatile, nonvolatile, or a hybrid combination of volatile and nonvolatile varieties.

Computer programs implementing the methods described herein will commonly be stored and/or distributed either on a physical distribution medium such as DVD-ROM or pluggable memory module (for example, a flash memory device with a USB interface), or via a network distribution medium such as an internet protocol and/or cellular data network, using other media, or through some combination of such distribution media. From there, they will in some embodiments be copied to a hard disk, non-volatile memory, or a similar intermediate storage medium. When the programs are to be run, they are loaded either from their distribution medium or their intermediate storage medium into the execution memory of the CPU (240) and/or GPU (260), configuring the CPU (240) and/or GPU (260) to act in accordance with the methods described herein. All of these operations are well known to those skilled in the art of computer systems.

The following non-exhaustive examples relate to various ways in which the teachings herein may be combined or applied. It should be understood that the following examples are not intended to restrict the coverage of any claims that may be presented at any time in this application or in subsequent filings related to this application. No disclaimer is intended. The following examples are being provided for nothing more than merely illustrative purposes. It is contemplated that the various teachings herein may be arranged and applied in numerous other ways. It is also contemplated that some variations may omit certain features referred to in the below examples. Therefore, none of the aspects or features referred to below should be deemed critical unless otherwise explicitly indicated as such at a later date by the inventors or by a successor in interest to the inventors. If any claims are presented in this application or in subsequent filings related to this application that include additional features beyond those referred to below, those additional features shall not be presumed to have been added for any reason relating to patentability.

Example 1 is a GPU-based method for computing a Voronoi mesh for a plurality of seed points in an n-dimensional space where n ≥ 2, the space being segmented into octants represented by an octree. The method includes storing the octree on a memory of the GPU and, with the GPU, finding a Voronoi cell around a first seed point in the plurality of seed points using a cell-finding method comprising: (1) from the first seed point, using the octree, identifying a set of neighboring seed points in an initial set of octants that are adjacent to a first octant containing the first seed point; (2) one or more times, iterating the sub-method comprising: (a) using the set of neighboring seed points, determining a set of bisectors that together form a boundary around the first seed point, where each bisector is midway between the first seed point and one of the neighboring seed points, and each bisector meets adjacent bisectors at a shared vertex; (b) identifying zero or more new octants, where each new octant (i) during a first iteration, is adjacent to at least one octant from the initial set of octants, or during a subsequent iteration, is adjacent to at least one new octant identified in the immediately prior iteration, and (ii) includes a portion of the n-dimensional space that is no more than a distance ε farther from a vertex than the vertex is from the first seed point; and (c) adding any new seed points in the zero or more new octants to the set of neighboring seed points; until the identifying step identifies no new octants. Then output data characterizing the boundary from the last determining step as the Voronoi cell containing the first seed point, and store the Voronoi cell on the memory of the GPU.

Example 2 is the method of example 1, where n is three.

Example 3 is the method of either example 1 or 2, where the programming instructions are further executable by the GPU to run the cell-finding method on multiple seed points in parallel.

Example 4 is the method of any of examples 1-3, further comprising, with the GPU: running the cell-finding method on each seed point in the plurality of seed points; creating a composite of the Voronoi cells for the plurality of seed points as a consistently connected Voronoi mesh; and storing the consistently connected Voronoi mesh on the memory of the GPU.

Example 5 is the method of example 4, further comprising, when creating the composite of the Voronoi cells, guaranteeing that the consistently connected Voronoi mesh is topologically consistently connected by computing robust geometric predicates on the GPU and using the memory of the GPU in order to exclude round-off errors due to floating point operations.

Example 6 is the method of example 5, further comprising using a compression method to reduce use of the memory of the GPU during computation of the robust geometric predicates.

Example 7 is the method of example 6, further comprising running a solver on the GPU using the consistently connected Voronoi mesh stored in the memory of the GPU.

Example 8 is the method of any of examples 1-7, wherein each seed point is at the centroid of an octant, and wherein each octant contains exactly one seed point.

Example 9 is the method of any of examples 1-8, further comprising an interleaved testing step when identifying new octants and determining bisectors, the interleaved testing step comprising: performing an inexact test for whether existing vertices of any Voronoi cell are clipped off by a potential new neighbor site; performing an error-bounds check on the result of the inexact test based on configured error bounds; and for any potential new neighbor sites that fail the error bound check, performing an exact check for whether existing vertices of a Voronoi cell are clipped off by the potential new neighbor site.

Example 10 is the method of example 9, further comprising, before performing the interleaved testing step: determining whether the potential new neighbor site has already been tested during a prior iteration; and where it has already been tested, skipping the interleaved testing step for that potential new neighbor site.

Example 11 is the method of either of examples 9 or 10, further comprising, during the steps of identifying new octants and determining bisectors: compressing the representation of vertices into a compact representation for those vertices which are finally computed; and storing the compressed encoding of the vertex in the memory of the GPU.

Example 12 is a system for computing a Voronoi mesh for a plurality of seed points, in an n-dimensional space where n ≥ 2, the space being segmented into octants represented by an octree, the system comprising: a processor; a GPU; a non-transitory storage device; and a memory. The memory stores instructions whereby the processor is configured to perform the steps of: (A) storing the octree on a memory of the GPU; and (B) with the GPU, finding a Voronoi cell around a first seed point in the plurality of seed points using a cell-finding method comprising: (1) from the first seed point, using the octree, identifying a set of neighboring seed points in an initial set of octants that are adjacent to a first octant containing the first seed point; (2) one or more times, iterating the sub-method comprising: (a) using the set of neighboring seed points, determining a set of bisectors that together form a boundary around the first seed point, where each bisector is midway between the first seed point and one of the neighboring seed points, and each bisector meets adjacent bisectors at a shared vertex; (b) identifying zero or more new octants, where each new octant (i) during a first iteration, is adjacent to at least one octant from the initial set of octants, or during a subsequent iteration, is adjacent to at least one new octant identified in the immediately prior iteration, and (ii) includes a portion of the *n-*dimensional space that is no more than a distance ε farther from a vertex than the vertex is from the first seed point; and (c) adding any new seed points in the zero or more new octants to the set of neighboring seed points; until the identifying step identifies no new octants; (3) outputting data characterizing the boundary from the last determining step as the Voronoi cell containing the first seed point; and (4) storing the Voronoi cell on the memory of the GPU.

Example 13 is the system of example 12, where n is three.

Example 14 is the system of either of examples 12 or 13, where the programming instructions are further executable by the GPU to run the cell-finding method on multiple seed points in parallel.

Example 15 is the system of any of examples 12-14, further comprising, with the GPU: running the cell-finding method on each seed point in the plurality of seed points; creating a composite of the Voronoi cells for the plurality of seed points as a consistently connected Voronoi mesh; and storing the consistently connected Voronoi mesh on the memory of the GPU.

Example 16 is the system of example 15, further comprising, when creating the composite of the Voronoi cells, guaranteeing that the consistently connected Voronoi mesh is topologically consistently connected by computing robust geometric predicates on the GPU and using the memory of the GPU in order to exclude round-off errors due to floating point operations.

Example 17 is the system of example 16, the processor being further configured to perform the step of using a compression method to reduce use of the memory of the GPU during computation of the robust geometric predicates.

Example 18 is the system of example 17, the processor being further configured to perform the step of running a solver on the GPU using the consistently connected Voronoi mesh stored in the memory of the GPU.

Example 19 is the system of any of examples 12-18, wherein each seed point is at the centroid of an octant, and wherein each octant contains exactly one seed point.

Example 20 is the system of any of examples 12-19, the processor further configured to perform an interleaved testing step when identifying new octants and determining bisectors comprising: performing an inexact test for whether existing vertices of any Voronoi cell are clipped off by a potential new neighbor site; performing an error-bounds check on the result of the inexact test based on configured error bounds; and for any potential new neighbor sites that fail the error bound check, performing an exact check for whether existing vertices of a Voronoi cell are clipped off by the potential new neighbor site.

All publications, prior applications, and other documents cited herein are hereby incorporated by reference in their entirety as if each had been individually incorporated by reference and fully set forth. While the invention has been illustrated and described in detail in the drawings and foregoing description, the same is to be considered as illustrative and not restrictive in character, it being understood that only the preferred embodiment has been shown and described and that all changes and modifications that come within the spirit of the invention are desired to be protected.

## Claims

1. A GPU-based method for computing a Voronoi mesh for a plurality of seed points (402, 404, 406, 408, 410, 412, 414, 416, 418, 420, 422, 424), in an n-dimensional space where n ≥ 2, segmented into octants (401, 403, 405, 407, 409, 411, 413, 415, 417, 419, 421, 423) represented by an octree, the method comprising:
storing the octree on a memory of the GPU (265);
with the GPU (260), finding a Voronoi cell around a first seed point (410) in the plurality of seed points (402, 404, 406, 408, 410, 412, 414, 416, 418, 420, 422, 424) using a cell-finding method comprising:
from the first seed point (410), using the octree, identifying a set of neighboring seed points (404, 406, 408, 414, 416) in an initial set of octants (403, 405, 407, 413, 415) that are adjacent to a first octant containing the first seed point (410);
one or more times, iterating the sub-method comprising:
using the set of neighboring seed points (404, 406, 408, 414, 416), determining (520) a set of bisectors that together form a boundary around the first seed point (410), where each bisector is midway between the first seed point (410) and one of the neighboring seed points (404, 406, 408, 414, 416), and each bisector meets adjacent bisectors at a shared vertex;
identifying zero or more new octants, where each new octant (i) during a first iteration, is adjacent to at least one octant from the initial set of octants (403, 405, 407, 413, 415), or during a subsequent iteration, is adjacent to at least one new octant identified in the immediately prior iteration, and (ii) includes a portion of the n-dimensional space that is no more than a distance ε farther from a vertex than the vertex is from the first seed point (410); and
adding any new seed points in the zero or more new octants to the set of neighboring seed points (404, 406, 408, 414, 416);
until the identifying step identifies no new octants;
outputting data characterizing the boundary from the last determining step as the Voronoi cell containing the first seed point (410); and
storing the Voronoi cell on the memory of the GPU (265).

2. The method of claim 1, where n is three.

3. The method of either claim 1 or claim 2, where the programming instructions are further executable by the GPU (260) to run the cell-finding method on multiple seed points in parallel.

4. The method of any of claims 1-3, further comprising, with the GPU (260):
running the cell-finding method on each seed point in the plurality of seed points (402, 404, 406, 408, 410, 412, 414, 416, 418, 420, 422, 424);
creating a composite of the Voronoi cells for the plurality of seed points (402, 404, 406, 408, 410, 412, 414, 416, 418, 420, 422, 424) as a consistently connected Voronoi mesh; and
storing the consistently connected Voronoi mesh on the memory of the GPU (265).

5. The method of claim 4, further comprising, when creating the composite of the Voronoi cells, guaranteeing that the consistently connected Voronoi mesh is topologically consistently connected by computing robust geometric predicates on the GPU (260) and using the memory of the GPU (265) in order to exclude round-off errors due to floating point operations.

6. The method of claim 5, further comprising using a compression method to reduce use of the memory of the GPU (265) during computation of the robust geometric predicates.

7. The method of claim 6, further comprising running a solver on the GPU (260) using the consistently connected Voronoi mesh stored in the memory of the GPU (265).

8. The method of any of claims 1-7, wherein each seed point is at the centroid of an octant, and wherein each octant contains exactly one seed point.

9. The method of any of claims 1-8, further comprising an interleaved testing step when identifying new octants and determining bisectors, the interleaved testing step comprising:
performing an inexact test for whether existing vertices of any Voronoi cell are clipped off by a potential new neighbor site;
performing an error-bounds check on the result of the inexact test based on configured error bounds; and
for any potential new neighbor sites that fail the error bound check, performing an exact check for whether existing vertices of a Voronoi cell are clipped off by the potential new neighbor site.

10. The method of claim 9, further comprising, before performing the interleaved testing step:
determining whether the potential new neighbor site has already been tested during a prior iteration; and
where it has already been tested, skipping the interleaved testing step for that potential new neighbor site.

11. The method of either claim 9 or claim 10, further comprising, during the steps of identifying new octants and determining bisectors:
compressing the representation of vertices into a compact representation for those vertices which are finally computed; and
storing the compressed encoding of the vertex in the memory of the GPU (265).
